# EUROPÄISCHE PATENTSCHRIFT

(11) **EP 2 510 040 B1**
(45) Veröffentlichungstag und Bekanntmachung des Hinweises auf die Patenterteilung: **13.11.2013**
(21) Anmeldenummer: 10787744.1
(22) Anmeldetag: 03.12.2010
(51) Int. Cl.: C08G 64/02, A01N 25/30

(54) **ALKOXYLIERTE HYPERVERZWEIGTE POLYCARBONATE ZUR SOLUBILISIERUNG SCHWERLÖSLICHER WIRKSTOFFE**
ALKOXYLATED HYPERBRANCHED POLYCARBONATES FOR SOLUBILIZING POORLY SOLUBLE ACTIVE INGREDIENTS
POLYCARBONATES ALCOXYLÉS HYPER RAMIFIÉS POUR LA SOLUBILISATION DE SUBSTANCES ACTIVES DIFFICILEMENT SOLUBLES

(30) Priorität: 09.12.2009 EP 09178507
(43) Veröffentlichungstag der Anmeldung: 17.10.2012
(73) Patentinhaber: BASF SE, 67056 Ludwigshafen (DE)
(72) Erfinder: TÜRK, Holger, 68161 Mannheim (DE); HABERECHT, Monika, 67063 Ludwigshafen (DE); BRUCHMANN, Bernd, 67251 Freinsheim (DE); KUNST, Andreas, 67063 Ludwigshafen (DE); SCHÖNFELDER, Daniel, B-1000 Bruxelles (BE); ISHAQUE, Michael, 68165 Mannheim (DE)
(86) Internationale Anmeldenummer: PCT/EP2010/068791
(87) Internationale Veröffentlichungsnummer: WO 2011/069895

(56) Entgegenhaltungen:
- WO-A1-2009/021986
- WO-A1-2010/130599
- DE-A1-102005 009 166

## Beschreibung

Gegenstand der vorliegenden Erfindung ist eine Zusammensetzung enthaltend einen Wirkstoff, der in Wasser bei 20 °C zu höchstens 10 g/L löslich ist, und ein Amphiphil umfassend ein alkoxyliertes, hyperverzweigtes Polycarbonat, wobei das Polycarbonat einen Alkohol (B1) enthält, der ein tri- oder höherfunktionelles Polyetherol ist auf Basis von einem C₃-C₁₂ Alkylenoxid und einem Alkohol, der mindestens drei OH-Gruppen aufweist. Weiterer Gegenstand ist ein Amphiphil enthaltend das Polycarbonat, und ein Verfahren zur Herstellung des Amphiphils. Die Erfindung betrifft weiterhin die Verwendung des Amphiphils zur Solubilisierung eines Wirkstoffs, der in Wasser bei 20 °C zu höchstens 10 g/L löslich ist, in wässrigen Lösungen sowie ein Verfahren zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen. Kombinationen bevorzugter Merkmale mit anderen bevorzugten Merkmalen werden von der vorliegenden Erfindung umfasst.

In vielen Fällen ist es erforderlich, hydrophobe Wirkstoffe in Wasser zu solubilisieren, ohne den betreffenden Wirkstoff als solchen chemisch zu verändern. Dazu ist es beispielsweise möglich, eine Emulsion herzustellen, wobei sich der betreffende Wirkstoff in der Ölphase der Emulsion befindet. Bei vielen pharmazeutischen Wirkstoffen oder Pflanzenschutzmitteln, insbesondere bei solchen, die mit einer Körperflüssigkeit oder in einem Pflanzensaft transportiert werden sollen, ist ein derartiges Vorgehen jedoch nicht möglich. Unter der Einwirkung von hohen Scherkräften können Emulsionen brechen. Außerdem ist eine Sterilisierung unter Erhalt der Emulsion in vielen Fällen nicht möglich.

Zusammensetzungen enthaltend ein Amphiphil und einen schwerlöslichen Wirkstoff sind allgemein bekannt:
WO 2007/125028 offenbart ein Verfahren zur Solubilisierung von hydrophoben Wirkstoffen in wässrigem Medium, wobei man als Hilfsmittel ein hyperverzweigtes Polymer einsetzt, erhältlich durch Herstellung eines hyperverzweigten Polyesters auf Basis einer Dicarbonsäure, Tri- oder Tetracarbonsäure und einem Diol oder Triol, und Umsetzung des Polyesters mit einer Polyalkylenoxideinheit.
WO 2009/021986 offenbart eine Saatgutbeize umfassend einen Wirkstoff und ein hyperverzweigtes Polymer, welches beispielsweise ein hyperverzweigtes Polycarbonat sein kann.

Nachteilig an den bekannten Amphiphilen zur Solubilisierung von hydrophoben Wirkstoffen in wässrigen Medien ist, dass sie nur kleine Mengen an Wirkstoff solubilisieren können. Außerdem sind die Amphiphile oft selbst nicht wasserlöslich oder nicht wasserdispergierbar, so dass sie zur Solubilisierung in wässrigen Medien nicht geeignet sind. Weiterhin haben Polyester-haltige Amphiphile den Nachteil, dass sie selbst teilweise hydrolyseempfindlich sind, insbesondere durch die vorhandenen terminalen Säuregruppen.

Polycarbonate werden üblicherweise aus der Reaktion von Alkoholen oder Phenolen mit Phosgen oder aus der Reaktion von Alkoholen oder Phenolen mit Dialkyl- oder Diarylcarbonaten erhalten. Technisch bedeutend sind aromatische Polycarbonate, die zum Beispiel aus Bisphenolen hergestellt werden; aliphatische Polycarbonate spielen vom Marktvolumen her gesehen bisher eine untergeordnete Rolle. Die in der Literatur beschriebenen aromatischen oder aliphatischen Polycarbonate sind in der Regel linear oder mit einem lediglich geringen Verzweigungsgrad aufgebaut. Jedoch sind auch hyperverzweigte Polycarbonate allgemein bekannt: WO 2006/089940 offenbart wasseremulgierbare hyperverzweigte Polycarbonate, die zumindest teilweise direkt mit einem monofunktionellen Polyalkylenoxidpolyetheralkohol umgesetzt sind.

**Aufgabe** der vorliegenen Erfindung war es, ein alternatives Amphiphil zu finden, das zur Solubilisierung von schwerlöslichen Wirkstoffen in wässrigem Medium geeignet ist. Weitere Aufgabe war es, ein Amphiphil zu finden, das möglichst hohe Mengen an Wirkstoff, insbesondere agrochemischen Wirkstoff, solubilisieren kann. Des Weiteren sollte das Amphiphil selbst wasserlöslich oder wasserdispergierbar sein. Schließlich war es auch Aufgabe, ein Amphiphil zu finden, das weniger hydrolyseempfindlich ist als Polyester.

Die Aufgabe wurde gelöst durch eine Zusammensetzung enthaltend einen Wirkstoff, der in Wasser bei 20 °C zu höchstens 10 g/L löslich ist, und ein Amphiphil umfassend ein alkoxyliertes, hyperverzweigtes Polycarbonat, wobei das Polycarbonat einen Alkohol (B1) enthält, der ein tri- oder höherfunktionelles Polyetherol ist auf Basis von einem C₃-C₁₂ Alkylenoxid und einem Alkohol, der mindestens drei OH-Gruppen aufweist wobei das Polyetherol mindestens drei Moleküle C₃-C₁₂ Alkylenoxid in polymerisierter Form enthält.

Der **Wirkstoff** ist in Wasser bei 20 °C zu höchstens 10 g/L, bevorzugt zu höchstens 2 g/l, besonders bevorzugt zu höchstens 0,5 g/l und speziell zu höchstens 0,1 g/l löslich. Die Zusammensetzung kann einen oder mehrere verschiedene Wirkstoffe enthalten. Beispiele für Wirkstoffe sind agrochemische Wirkstoffe, kosmetische Wirkstoffe, pharmazeutische Wirkstoffe oder Nahrungsergänzungsmittel (wie Vitamine und Carotinoide). Bevorzugte Wirkstoffe sind agrochemische Wirkstoffe.

Beispiele für **kosmetische Wirkstoffe** sind kosmetische Öle, Riech- und Aromastoffe, Vitamine oder UV-Absorber. Kosmetische Öle sind unter anderem Erdnussöl, Jojobaöl, Kokosnussöl, Mandelöl, Olivenöl, Palmöl, Ricinusöl, Sojaöl, Weizenkeimöl oder etherische Öle wie Latschenkiefernöl, Lavendelöl, Rosmarinöl, Fichtennadelöl, Kiefernnadelöl, Eukalyptusöl, Pfefferminzöl, Salbeiöl, Bergamotteöl, Terpentinöl, Melissenöl, Wacholderöl, Zitronenöl, Anisöl, Kardamomöl, Campheröl etc. oder deren Mischungen. UV-Absorber sind unter anderem 2-Hydroxy-4-methoxybenzophenon, 2,2',4,4'-Tetrahydroxybenzophenon, 2,2'-Dihydroxy-4,4'-dimethoxybenzophenon, 2,4-Dihydroxybenzophenon, 2-Cyano-3,3-diphenylacrylsäure-2'-ethylhexylester, 2,4,6-Trianilino-p-(carbo-2'-ethylhexyl-1'-oxi)-1,3,5-triazin, 3-(4-Methoxybenzyliden)-campher, N,N-Dimethyl-4-aminobenzoesäure-2-ethylhexylester, Salicylsäure-3,3,5-trimethylcyclohexylester, 4-Isopropyl-dibenzoylmethan, p-Methoxyzimtsäure-2-ethylhexylester und p-Methoxyzimtsäure-2-isoamylester sowie deren Mischungen.

Beispiele für **Riech**- und **Aromastoffe** sind wie in der WO 01/49817, oder in "Flavors and Fragrances", Ullmann's Encyclopedia of Industrial Chemistry, Whiley-VCH, 2002 beschrieben, auf die ausdrücklich Bezug genommen wird.

Beispiele für Vitamine sind Vitamine, Provitamine und Vitaminvorstufen aus den Gruppen A, C, E und F, insbesondere 3,4-Didehydroretinol, beta-Carotin (Provitamin des Vitamin A), Ascorbinsäure (Vitamin C), sowie die Palmitinsäureester, Glucoside oder Phosphate der Ascorbinsäure, Tocopherole, insbesondere alpha-Tocopherol sowie seine Ester, z.B. das Acetat, das Nicotinat, das Phosphat und das Succinat; weiterhin Vitamin F, worunter essentielle Fettsäuren, besonders Linolsäure, Linolensäure und Arachidonsäure, verstanden werden.

Als Beispiele für pharmazeutische Wirkstoffe seien hier genannt: Benzodiazepine, Antihypertensiva, Vitamine, Cytostatika, insbesondere Taxol, Anästhetika, Neuroleptika, Antidepressiva, antiviral wirksame Mittel wie beispielsweise Anti-HIV wirksame Mittel, Antibiotika, Antimykotika, Antidementiva, Fungizide, Chemotherapeutika, Urologika, Thrombozytenaggregationshemmer, Sulfonamide, Spasmolytika, Hormone, Immunglobuline, Sera, Schilddrüsentherapeutika, Psychopharmaka, Parkinsonmittel und andere Antihyperkinetika, Ophthalmika, Neuropathiepräparate, Calciumstoffwechselregulatoren, Muskelrelaxantia, Narkosemittel, Lipidsenker, Lebertherapeutika, Koronarmittel, Kardiaka, Immuntherapeutika, regulatorische Peptide und ihre Hemmstoffe, Hypnotika, Sedativa, Gynäkologika, Gichtmittel, Fibrinolytika, Enzympräparate und Transportproteine, Enzyminhibitoren, Emetika, Durchblutungsfördernde Mittel, Diuretika, Diagnostika, Corticoide, Cholinergika, Gallenwegstherapeutika, Antiasthmatika, Broncholytika, Betarezeptorenblocker, Calciumantagonisten, ACE-Hemmer, Arteriosklerosemittel, Antiphlogistika, Antikoagulantia, Antihypotonika, Antihypoglykämika, Antihypertonika, Antifibrinolytika, Antiepileptika, Antiemetika, Antidota, Antidiabetika, Antiarrhythmika, Antianämika, Antiallergika, Anthelmintika, Analgetika, Analeptika, Aldosteronantagonisten, Abmagerungsmittel.

Der Begriff **agrochemische** W**i**rkstoffe (im folgenden auch Pestizide genannt) bezeichnet mindestens einen Wirkstoff ausgewählt aus der Gruppe der Fungizide, Insektizide, Nematizide, Herbizide, Safener und/oder Wachstumsregulatoren. Bevorzugte Pestizide sind Fungizide, Insektizide und Herbizide, insbesondere Insektizide. Auch Mischungen von Pestiziden aus zwei oder mehr der vorgenannten Klassen können verwendet werden. Der Fachmann ist vertraut mit solchen Pestiziden, die beispielsweise in Pesticide Manual, 14th Ed. (2006), The British Crop Protection Council, London, gefunden werden können. Geeignete Insektizide sind Insektizide der Klasse der Carbamate, Organophophate, Organochlor-Insektizide, Phenylpyrazole, Pyrethroide, Neonicotinoide, Spinosine, Avermectine, Milbemycine, Juvenil Hormon Analoga, Alkylhalide, Organozinn-Verbindungen, Nereistoxin-Analoga, Benzoylharnstoffe, Diacylhydrazine, METI Akarizide, sowie Insektizide wie Chloropicrin, Pymetrozin, Flonicamid, Clofentezin, Hexythiazox, Etoxazol, Diafenthiuron, Propargit, Tetradifon, Chlorfenapyr, DNOC, Buprofezin, Cyromazin, Amitraz, Hydramethylnon, Acequinocyl, Fluacrypyrim, Rotenon, oder deren Derivate. Geeignete Fungizide sind Fungizide der Klassen Dinitroaniline, Allylamine, Anilinopyrimidine, Antibiotica, aromatische Kohlenwasserstoffe, Benzenesulfonamide, Benzimidazole, Benzisothiazole, Benzophenone, Benzothiadiazole, Benzotriazine, Benzylcarbamate, Carbamates, Carboxamide, Carbonsäureamdide, Chloronitrile, Cyanoacetamideoxime, Cyanoimidazole, Cyclopropanecarboxamide, Dicarboximide, Dihydrodioxazine, Dinitrophenylcrotonate, Dithiocarbamate, Dithiolane, Ethylphosphonate, Ethylaminothiazolcarboxamide, Guanidines, Hydroxy-(2-amino-)pyrimidine, Hydroxyanilides, Imidazole, Imidazolinone, Anorganika, Isobenzofuranone, Methoxyacrylate, Methoxycarbamates, Morpholines, N-Phenylcarbamate, Oxazolidinedione, Oximinoacetate, Oximinoacetamide, Peptidylpyrimidinnucleoside, Phenylacetamide, Phenylamide, Phenylpyrrole, Phenylharnstoffe, Phosphonate, Phosphorothiolate, Phthalamsäuren, Phthalimide, Piperazine, Piperidine, Propionamide, Pyridazinone, Pyridine, Pyridinylmethylbenzamide, Pyrimidinamine, Pyrimidine, Pyrimidinonehydrazone, Pyrroloquinolinone, Quinazolinone, Chinoline, Chinone, Sulfamide, Sulfamoyltriazole, Thiazolecarboxamide, Thiocarbamate, Thiophanate, Thiophenecarboxamide, Toluamide, Triphenylzinn Verbindungen, Triazine, Triazole. Geeignete Herbizide sind Herbizide der Klassen der Acetamide, Amide, Aryloxyphenoxypropionate, Benzamide, Benzofuran, Benzoesäuren, Benzothiadiazinone, Bipyridylium, Carbamate, Chloroacetamide, Chlorcarbonsäuren, Cyclohexanedione, Dinitroaniline, Dinitrophenol, Diphenylether, Glycine, Imidazolinone, Isoxazole, Isoxazolidinone, Nitrile, N-Phenylphthalimide, Oxadiazole, Oxazolidinedione, Oxyacetamide, Phenoxycarbonsäuren, Phenylcarbamate, Phenylpyrazole, Phenylpyrazoline, Phenylpyridazine, Phosphinsäuren, Phosphoroamidate, Phosphorodithioate, Phthalamate, Pyrazole, Pyridazinone, Pyridine, Pyridincarbonsäuren, Pyridinecarboxamide, Pyrimidindione, Pyrimidinyl(thio)benzoate, Chinolincarbonsäuren, Semicarbazone, Sulfonylaminocarbonyltriazolinone, Sulfonylharnstoffe, Tetrazolinone, Thiadiazole, Thiocarbamate, Triazine, Triazinone, Triazole, Triazolinone, Triazolocarboxamide, Triazolopyrimidine, Triketone, Uracile, Harnstoffe.

In einer Ausführungsform enthält das Pestizid ein Insektizid, bevorzugt besteht das Pestizid aus mindestens einem Insektizid. Bevorzugte Insektizide sind Fipronil, Allethrin, Alpha-Cypermethrin, Beta-Cyfluthrin, Bifenthrin, Bioallethrin, 4-Chlor-2-(2-chlor-2methylpropyl)-5-[(6-iod-3-pyridinyl)methoxy]-3(2H)-pyridazinone (CAS-RN: 120955-77-3), Chlorfenapyr, Chlorpyrifos, Cyfluthrin, Cyhalothrin, Cypermethrin, Deltamethrin, Etofenprox, Fenoxycarb, Flufenoxuron, Hydramethylnon, Metaflumizone, Permethrin, Pyriproxifen, Silafluofen, Tebufenozide und Tralomethrin. Besonders bevorzugte Insektizide sind Fipronil, Alpha-Cypermethrin, Bifenthrin, Chlorfenapyr, Cyfluthrin, Cypermethrin, Deltamethrin, Etofenprox, Hydramethylnon, Metaflumizone, Permethrin. Ganz besonders bevorzugte Insektizide sind Fipronil, Alpha-Cypermethrin, Deltamethrin, Chlorfe-napyr, Hydramethylnon und Metaflumizone. Insbesondere bevorzugtes Insektizid ist Fipronil. In einer weiteren Ausführungsform enthält das Pestizid ein Fungizid, bevorzugt besteht das Pestizid aus mindestens einem Fungizid. Bevorzugte Fungizide sind Pyraclostrobin, Metconazol und Epoxiconazol. In einer weiteren Ausführungsform enthält das Pestizid ein **Herbizid**, bevorzugt besteht das Pestizid aus mindestens einem Herbizid. In einer weiteren Ausführungsform enthält das Pestizid ein **Wachstumsregulator**, bevorzugt besteht das Pestizid aus mindestens einem Wachstumsregulator.

Die erfindungsgemäße Zusammensetzung umfasst üblicherweise 0.1 bis 70 Gew.% Wirkstoff, bevorzugt 1 bis 50 Gew.%, insbesondere 3 bis 30 Gew.%, bezogen auf die Zusammensetzung.

**Amphiphile** enthalten üblicherweise mindestens einen polaren (hydrophilen) und mindestens einen apolaren (hydrophoben) Teil. Typische Amphiphile sind Fettsäuren, Tenside und Phospholipide. Die Zusammensetzung kann ein oder mehrere verschiedene Amphiphile enthalten. Bevorzugt ist das Amphiphil ein alkoxyliertes, hyperverzweigtes Polycarbonat, wobei das Polycarbonat einen Alkohol (B1) enthält, der ein tri- oder höherfunktionelles Polyetherol ist auf Basis von einem C₃-C₁₂ Alkylenoxid und einem Alkohol, der mindestens drei OH-Gruppen aufweist.

Unter **hyperverzweigten Polycarbonaten** werden im Rahmen dieser Erfindung unvernetzte Makromoleküle mit Hydroxyl- und Carbonat- oder Carbamoylchloridgruppen verstanden, die sowohl strukturell als auch molekular uneinheitlich sind. Sie können auf der einen Seite ausgehend von einem Zentralmolekül analog zu Dendrimeren, jedoch im Unterschied zu diesen mit uneinheitlicher Kettenlänge der Äste aufgebaut sein. Hyperverzweigte Polymere sind daher zu unterscheiden von Dendrimeren (US 6,399,048). Im Sinne der vorliegenden Erfindung umfassen hyperverzweigte Polymere keine Dendrimere. Die hyperverzweigte Polymere können auf der anderen Seite auch linear, mit funktionellen, verzweigten Seitengruppen, aufgebaut sein oder aber, als Kombination der beiden Extreme, lineare und verzweigte Molekülteile aufweisen. Zur Definition von Dendrimeren und hyperverzweigten Polymeren siehe auch P.J. Flory, J. Am. Chem. Soc. 1952, 74, 2718 und H. Frey et al., Chem. Eur. J. 2000, 6, 2499. Unter "**hyperverzweigt**" wird im Zusammenhang mit der vorliegenden Erfindung verstanden, dass der Verzweigungsgrad (Degree of Branching, DB), das heißt der Quotient aus der Summe der mittleren Anzahl dendritischer Verknüpfungen plus mittlere Anzahl der Endgruppen und der Summe der mittleren Anzahl dendritischer und linearer Verknüpfungen plus der mittleren Anzahl der Endgruppen pro Molekül multipliziert mit 100, 10 bis 99,9 %, bevorzugt 20 bis 99 %, besonders bevorzugt 20 bis 95 % beträgt. Unter "dendrimer" wird im Zusammenhang mit der vorliegenden Erfindung verstanden, daß der Verzweigungsgrad 99,9 - 100% beträgt. Zur Definition des "Degree of Branching" siehe H. Frey et al., Acta Polym. 1997, 48, 30.

Es stellt einen Vorteil der vorliegenden Erfindung dar, daß die erfindungsgemäßen Polycarbonate unvernetzt sind. "**Unvernetzt**" im Rahmen dieser Schrift bedeutet, daß ein Vernetzungsgrad von weniger als 15 Gew.%, bevorzugt von weniger als 10 Gew.%, bestimmt über den unlöslichen Anteil des Polymeren, vorhanden ist. Der unlösliche Anteil des Polymeren wurde bestimmt durch vierstündige Extraktion mit dem gleichen Lösungsmittel, wie es für die Gelpermeationschromatographie zur Bestimmung der Molekulargewichtsverteilung der Polymere verwendet wird, also Tetrahydrofuran, Dimethylacetamid oder Hexafluorisopropanol, je nachdem, in welchem Lösungsmittel das Polymer besser löslich ist, in einer Soxhlet-Apparatur und nach Trocknung des Rückstandes bis zur Gewichtskonstanz Wägung des verbliebenen Rückstandes.

Das hyperverzweigte Polycarbonat ist üblicherweise erhältlich durch
a) Herstellung eines Kondensationsproduktes (K) durch Umsetzung eines organisches Carbonats (A) oder eines Phosgenderivates mit einem Alkohol (B1), der mindestens drei Hydroxygruppen aufweist, und
b) intermolekularer Umsetzung von K zu dem hyperverzweigten Polycarbonat, wobei das Mengenverhältnis der OH-Gruppen zu den Carbonat- oder Phosgengruppen so gewählt wird, dass K im Mittel entweder i) eine Carbonat- oder Carbamoylchloridgruppe und mehr als eine OH-Gruppe, oder ii) eine OH-Gruppe und mehr als eine Carbonat- oder Carbamoylgruppe aufweisen. Bevorzugt wird das Polycarbonat auf diese Weise erhalten.

Zur Herstellung des Kondensationsproduktes (K) kann ein organisches Carbonat (A) oder ein Phosgenderivat verwendet werden. Geeignete **Phosgenderivate** sind beispielsweise Phosgen, Diphosgen oder Triphosgen, bevorzugt Phosgen. Bevorzugt wird ein organisches Carbonat eingesetzt.

Bei den Resten R der als Ausgangsmaterial eingesetzten **organischen Carbonate** (A) der allgemeinen Formel RO[(CO)O]ₙR handelt es sich jeweils unabhängig voneinander um einen geradkettigen oder verzweigten aliphatischen, aromatisch/aliphatischen (araliphatischen) oder aromatischen Kohlenwasserstoffrest mit 1 bis 20 C-Atomen. Die beiden Reste R können auch unter Bildung eines Ringes miteinander verbunden sein.

Die beiden Reste R können gleich oder unterschiedlich sein, bevorzugt sind sie gleich. Bevorzugt handelt es sich um einen aliphatischen Kohlenwasserstoffrest und besonders bevorzugt um einen geradkettigen oder verzweigten Alkylrest mit 1 bis 5 C-Atomen, oder um einen substituierten oder unsubstituierten Phenylrest. R steht dabei für einen geradkettigen oder verzweigten, bevorzugt geradkettigen, (cyclo)aliphatischen, aromatisch/aliphatischen oder aromatischen, bevorzugt (cyclo)aliphatischen oder aromatischen, besonders bevorzugt aliphatischen Kohlenwasserstoffrest mit 1 bis 20 C-Atomen, bevorzugt 1 bis 12, besonders bevorzugt 1 bis 6 und ganz besonders bevorzugt 1 bis 4 Kohlenstoffatomen. Beispiele dafür sind Methyl, Ethyl, iso-Propyl, n-Propyl, n-Butyl, iso-Butyl, sek-Butyl, tert-Butyl, n-Hexyl, n-Heptyl, n-Octyl, n-Decyl, n-Dodecyl, n-Tetradecyl, n-Hexadecyl, n-Octadecyl, n-Eicosyl, 2-Ethylhexyl, Cyclopentyl, Cyclohexyl, Cyclooctyl, Cyclododecyl, Phenyl, o- oder p-Tolyl oder Naphthyl. Bevorzugt sind Methyl, Ethyl, n-Butyl und Phenyl. Die Reste R können dabei gleich oder verschieden sind, bevorzugt sind sie gleich. Die Reste R können auch unter Bildung eines Ringes miteinander verbunden sein. Beispiele für derartige zweibindige Reste R sind 1,2-Ethylen, 1,2-Propylen und 1,3-Propylen. Generell handelt es sich bei n um eine ganze Zahl von 1 bis 5, bevorzugt von 1 bis 3, besonders bevorzugt von 1 bis 2. Bei den Carbonaten kann es sich bevorzugt um einfache Carbonate der allgemeinen Formel RO(CO)OR handeln, d.h. in diesem Falle steht n für 1.

Beispiele geeigneter Carbonate umfassen aliphatische, aromatisch/aliphatische oder aromatische Carbonate wie Ethylencarbonat, 1,2- oder 1,3-Propylencarbonat, Diphenylcarbonat, Ditolylcarbonat, Dixylylcarbonat, Dinaphthylcarbonat, Ethylphenylcarbonat, Dibenzylcarbonat, Dimethylcarbonat, Diethylcarbonat, Di-n-propylcarbonat, Di-n-butylcarbonat, Diisobutylcarbonat, Dipentylcarbonat, Dihexylcarbonat, Dicyclohexylcarbonat, Diheptylcarbonat, Dioctylcarbonat, Didecylcarbonat oder Didodecylcarbonat. Beispiele für Carbonate, bei denen n größer als 1 ist, umfassen Dialkyldicarbonate, wie Di(tert.butyl)dicarbonat oder Dialkyltricarbonate wie Di(tert.butyl)tricarbonat. Ein bevorzugtes aromatisches Carbonat ist Diphenylcarbonat. Bevorzugt werden aliphatische Carbonate eingesetzt, insbesondere solche, bei denen die Reste 1 bis 5 C-Atome umfassen, wie zum Beispiel Dimethylcarbonat, Diethylcarbonat, Di-n-propylcarbonat, Di-n-butylcarbonat oder Diisobutylcarbonat. Speziell bevorzugt wird Diethylcarbonat.

Üblicherweise enthält das hyperverzweigte Polycarbonat einen **Alkohol (B1)**, der ein tri- oder höherfunktionelles Polyetherol ist auf Basis von einem C₃-C₁₂ Alkylenoxid und einem Alkohol, der mindestens drei OH-Gruppen aufweist. Geeignete Alkohole, die mindestens drei OH-Gruppen aufweisen, können verzweigt oder unverzweigt, substituiert oder unsubstituiert sein und 3 bis 26 Kohlenstoffatome aufweisen. Bevorzugt handelt es sich um einen aliphatischen Alkohol. Beispiele für Verbindungen mit mindestens drei OH-Gruppen umfassen Glycerin, Trimethylolmethan, Trimethylolethan, Trimethylolpropan (TMP), Di-TMP, Trimethylolbutan, 1,2,4-Butantriol, 1,2,3-Hexantriol, 1,2,4-Hexantriol, Tris(hydroxymethyl)amin, Tris(hydroxyethyl)amin, Tris(hydroxypropyl)amin,

Pentaerythrit, Dipentaerythrit, Diglycerin, Triglycerin, Polyglycerine, Tris(hydroxymethyl)isocyanurat, Tris(hydroxyethyl)isocyanurat, Phloroglucinol, Trihydroxytoluol, Trihydroxydimethylbenzol, Phloroglucide, Hexahydroxybenzol, 1,3,5-Benzoltrimethanol, 1,1,1-Tris(4'-hydroxyphenyl)methan, 1,1,1-Tris(4'-hydroxyphenyl)ethan, Zucker, wie zum Beispiel Glucose, Zuckerderivate, wie z.B. Sorbit, Mannit, Diglycerol, Threit, Erythrit, Adonit (Ribit), Arabit (Lyxit), Xylit, Dulcit (Galactit), Maltit, Isomalt, oder Polyesterol. Bevorzugte Alkohole, die mindestens drei OH-Gruppen aufweisen, sind Glycerin, Trimethylolethan, Trimethylolpropan, 1,2,4-Butantriol, 1,2,3-Hexantriol, 1,2,4-Hexantriol, Pentaerythrit, besonders bevorzugt Glycerin oder Trimethylolpropan. Bevorzugte **C₃-C₁₂ Alkylenoxide** sind unter anderem Propylenoxid, Butylenoxid, Pentylenoxid und deren Mischungen, besonders bevorzugt Propylenoxid. Die tri- oder höherfunktionellen Polyetherole enthalten meist mindestens drei, bevorzugt drei bis 30, besonders bevorzugt 3 bis 20 Moleküle C₃-C₁₂ Alkylenoxid in polymerisierter Form. Besonders bevorzugter Alkohol (B1) ist ein trifunktionelles Polyetherol auf Basis von Glycerin, Trimethylolethan, Trimethylolpropan, 1,2,4-Butantriol und/oder Pentaerythrit, und Propylenoxid, wobei das Polyetherol mindestens drei, bevorzugt drei bis 30, besonders bevorzugt drei bis 20 Moleküle Propylenoxid in polymerisierter Form enthält. Die C₃-C₁₂ Alkylenoxid Moleküle, die in polymerisierter Form in dem Polyetherol enthalten sind, können über eine oder mehrere der Alkoholgruppen des Polyetherols mit dem Polyetherol verknüpft sein. Die C₃-C₁₂ Alkylenoxid Moleküle können eine oder mehrere Ketten von polymerisierten C₃-C₁₂ Alkylenoxid Molekülen bilden. Üblicherweise ist der Alkohol (B1) erhältlich durch Polymerisation der C₃-C₁₂ Alkylenoxid Moleküle an das Polyetherol. Dadurch werden die C₃-C₁₂ Alkylenoxid Moleküle meist statistisch verteilt an das Polyethermolekül anpolymerisiert.
Zusätzlich zu dem Alkohol (B1) kann das Polycarbonat einen **difunktionellen Alkohol** (B2) als Aufbaukomponente aufweisen, mit der Maßgabe, dass die mittlere OH-Funktionalität aller eingesetzten Alkohole B zusammen größer als 2 ist. Die Alkohole (B1) und (B2) werden hier zusammen als (B) bezeichnet. Geeignete difunktionelle Alkohole B2 sind unter anderem Diethylenglykol, Triethylenglykol, 1,2- und 1,3-Propandiol, Dipropylenglykol, Tripropylenglykol, Neopentylglykol, 1,2-, 1,3- und 1,4-Butandiol, 1,2-, 1,3- und 1,5-Pentandiol, 1,6-Hexandiol, 1,2- oder 1,3-Cyclopentandiol, 1,2-, 1,3- oder 1,4-Cyclohexandiol, 1,1-, 1,2-, 1,3- oder 1,4-Cyclohexandimethanol, Bis(4-Hydroxycyclohexyl)methan, Bis(4-Hydroxycyclohexyl)ethan, 2,2- Bis(4-Hydroxycyclohexyl)propan, 1,1'-Bis(4-Hydroxyphenyl)-3,3-5-trimethylcyclohexan, Resorcin, Hydrochinon, 4,4'-Dihydroxydiphenyl, Bis-(4-Hydroxyphenyl)sulfid, Bis(4-Hydroxyphenyl)sulfon, Bis(hydroxymethyl)benzol, Bis(Hydroxymethyl)toluol, Bis(p-hydroxyphenyl)methan, Bis(p-hydroxyphenyl)ethan, 2,2-Bis(p-hydroxyphe-nyl)propan, 1,1-Bis(p-hydroxyphenyl)cyclohexan, Dihydroxybenzophenon, difunktionelle Polyetherpolyole auf Basis Ethylenoxid, Propylenoxid, Butylenoxid, Pentylenoxid oder deren Gemische, Polytetrahydrofuran mit einem Molgewicht von 162 bis 2000, Polycaprolacton oder Polyesterole auf Basis von Diolen und Dicarbonsäuren. Bevorzugter difunktioneller Alkohol (B2) sind difunktionelle Polyetherpolyole auf Basis Ethylenoxid, Propylenoxid, Butylenoxid, Pentylenoxid oder deren Gemische, und Polyesterole auf Basis von Diolen und Dicarbonsäuren.

Die Diole dienen zur Feineinstellung der Eigenschaften des Polycarbonates. Falls difunktionelle Alkohole eingesetzt werden, wird das Verhältnis von difunktionellen Alkoholen (B2) zu den mindestens trifunktionellen Alkoholen (B1) vom Fachmann je nach den gewünschten Eigenschaften des Polycarbonates festgelegt. Im Regelfalle beträgt die Menge des oder der Alkohole (B2) 0 bis 50 mol % bezüglich der Gesamtmenge aller Alkohole (B1) und (B2) zusammen. Bevorzugt beträgt die Menge 0 bis 35 mol %, besonders bevorzugt 0 bis 25 mol % und ganz besonders bevorzugt 0 bis 10 mol %.

Die Reaktion von Phosgen, Diphosgen oder Triphosgen mit dem Alkohol oder Alkoholgemisch erfolgt in der Regel unter Eliminierung von Chlorwasserstoff, die Reaktion der Carbonate mit dem Alkohol oder Alkoholgemisch zum hochfunktionellen hyperverzweigten Polycarbonat erfolgt unter Eliminierung des monofunktionellen Alkohols oder Phenols aus dem Carbonat-Molekül.

Das hyperverzweigte Polycarbonat ist nach dieser Reaktion, also ohne weitere Modifikation, hochfunktionell mit Hydroxylgruppen und mit Carbonatgruppen beziehungsweise Carbamoylchloridgruppen terminiert. Unter einem **hochfunktionellen Polycarbonat** ist im Rahmen dieser Erfindung ein Produkt zu verstehen, das neben den Carbonatgruppen, die das Polymergerüst bilden, end- oder seitenständig weiterhin mindestens drei, bevorzugt mindestens vier, mehr bevorzugt mindestens sechs funktionelle Gruppen aufweist. Bei den funktionellen Gruppen handelt es sich um Carbonatgruppen beziehungsweise Carbamoylchloridgruppen und/oder um OH-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen Polycarbonate der vorliegenden Erfindung weisen zumeist nicht mehr als 500 end- oder seitenständige funktionelle Gruppen, bevorzugt nicht mehr als 100 end- oder seitenständige funktionelle Gruppen auf.

Bei der Herstellung der hochfunktionellen Polycarbonate ist es notwendig, das Verhältnis von den OH-Gruppen enthaltenden Verbindungen zu Phosgen oder Carbonat (A) so einzustellen, dass das resultierende einfachste Kondensationsprodukt (im Weiteren **Kondensationsprodukt (K)** genannt) im Mittel entweder i) eine Carbonat- oder Carbamoylchloridgruppe und mehr als eine OH-Gruppe oder ii) eine OH-Gruppe und mehr als eine Carbonat- oder Carbamoylchloridgruppe, bevorzugt im Mittel entweder i) eine Carbonat- oder Carbamoylchloridgruppe und mindestens zwei OH-Gruppen oder ii) eine OH-Gruppe und mindestens zwei Carbonat- oder Carbamoylchloridgruppen enthält.

Es kann ferner sinnvoll sein, zur Feineinstellung der Eigenschaften des Polycarbonates mindestens eine **zweiwertige carbonylreaktive Verbindung (A1)** einzusetzen. Darunter werden solche Verbindungen verstanden, die zwei Carbonat- und/oder Carboxylgruppen aufweisen. Carboxylgruppen können dabei Carbonsäuren, Carbonsäurechloride, Carbonsäureanhydride oder Carbonsäureester sein, bevorzugt Carbonsäureanhydride oder Carbonsäureester und besonders bevorzugt Carbonsäureester. Falls solche zweiwertigen Verbindungen (A1) eingesetzt werden, so wird das Verhältnis von (A1) zu den Carbonaten bzw. Phosgenen (A) vom Fachmann je nach den gewünschten Eigenschaften des Polycarbonates festgelegt. Im Regelfalle beträgt die Menge des oder der zweiwertigen Verbindung (A1) 0 bis 40 mol % bezüglich der Gesamtmenge aller Carbonate/Phosgene (A) und Verbindungen (A1) zusammen. Bevorzugt beträgt die Menge 0 bis 35 mol %, besonders bevorzugt 0 bis 25 mol % und ganz besonders bevorzugt 0 bis 10 mol %. Beispiele für Verbindungen (A1) sind Dicarbonate oder Dicarbamoylchloride von Diolen, beispielsweise Ethylenglykol, 1,2-Propandiol, 1,3-Propandiol, 1,1-Dimethylethan-1,2-diol, 2-Butyl-2-ethyl-1,3-Propandiol, 2-Ethyl-1,3-Propandiol, 2-Methyl-1,3-Propandiol, Neopentylglykol, Hydroxypivalinsäureneopentylglykolester, 1,2-, 1,3- oder 1,4-Butandiol, 1,6-Hexandiol, 1,10-Dekandiol, Bis-(4-hydroxycyclohexan)-isopropyliden, Tetramethylcyclobutandiol, 1,2-, 1,3- oder 1,4-Cyclohexandiol, Cyclooc-tandiol, Norbornandiol, Pinandiol, Decalindiol, 2-Ethyl-1,3-Hexandiol, 2,4-Diethyloktan-1,3-diol, Hydrochinon, Bisphenol A, Bisphenol F, Bisphenol B, Bisphenol S, 2,2-Bis(4-hydroxycyclohexyl)propan, 1,1-, 1,2-, 1,3- und 1,4-Cyclohexandimethanol, 1,2-, 1,3- oder 1,4-Cyclohexandiol. Diese können beispielsweise hergestellt werden, indem man diese Diole mit einem Überschuß an beispielsweise den oben aufgeführten Carbonaten RO(CO)OR oder Chlorkohlensäureestern umsetzt, so dass die so erhaltenen Dicarbonate beidseitig mit Gruppen RO(CO) substituiert sind. Eine weitere Möglichkeit ist die, die Diole zunächst mit Phosgen zu den korrespondierenden Chlorkohlensäureestern der Diole umzusetzen und anschließend mit Alkoholen umzusetzen.

Weitere Verbindungen (A1) sind Dicarbonsäuren, Ester von Dicarbonsäuren, bevorzugt die Methyl-, Ethyl-, iso-Propyl-, n-Propyl-, n-Butyl-, iso-Butyl-, sek-Butyl- oder tert-Butylester, besonders bevorzugt die Methyl-, Ethyl- oder n-Butylester. Beispiele für derartige Dicarbonsäuren sind Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Azelainsäure, 1,4-Cyclohexandicarbonsäure oder Tetrahydrophthalsäure, Korksäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, dimere Fettsäuren, deren Isomere und Hydrierungsprodukte.

Die einfachste Struktur des Kondensationsproduktes (K), dargestellt am Beispiel der Umsetzung eines Carbonats (A) mit einem Di- oder Polyalkohol (B) ergibt dabei die Anordnung XYₘ oder YₘX, wobei X eine Carbonat- oder Carbamoylgruppe, Y eine Hydroxyl-Gruppe und m in der Regel eine ganze Zahl größer 1 bis 6, vorzugsweise größer 1 bis 4, besonders bevorzugt größer 1 bis 3 darstellt. Die reaktive Gruppe, die dabei als einzelne Gruppe resultiert, wird im folgenden generell "**fokale Gruppe**" genannt.

Liegt beispielsweise bei der Herstellung des einfachsten Kondensationsproduktes (K) aus einem Carbonat und einem zweiwertigen Alkohol das molare Umsetzungsverhältnis bei 1:1, so resultiert im Mittel ein Molekül des Typs XY, veranschaulicht durch die allgemeine Formel (I).

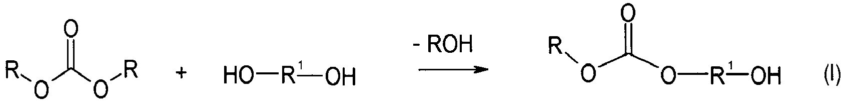

Bei der Herstellung des Kondensationsproduktes (K) aus einem Carbonat und einem dreiwertigen Alkohol bei einem molaren Umsetzungsverhältnis von 1 : 1 resultiert im Mittel ein Molekül des Typs XY₂, veranschaulicht durch die allgemeine Formel (II). Fokale Gruppe ist hier eine Carbonatgruppe.

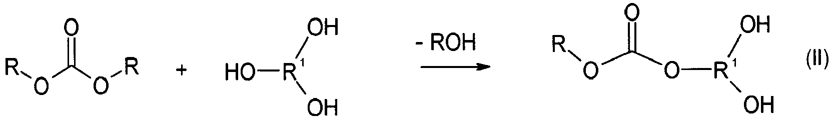

Bei der Herstellung des Kondensationsproduktes (K) aus einem Carbonat und einem vierwertigen Alkohol ebenfalls mit dem molaren Umsetzungsverhältnis 1 : 1 resultiert im Mittel ein Molekül des Typs XY₃, veranschaulicht durch die allgemeine Formel (III). Fokale Gruppe ist hier eine Carbonatgruppe.

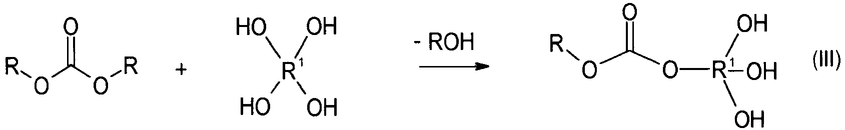

In den Formeln (I) bis (III) hat R die eingangs definierte Bedeutung und R¹steht für einen aliphatischen oder aromatischen Rest.

Weiterhin kann die Herstellung des Kondensationsprodukts (K) zum Beispiel auch aus einem Carbonat und einem dreiwertigen Alkohol, veranschaulicht durch die allgemeine Formel (IV), erfolgen, wobei das Umsetzungsverhältnis bei molar 2:1 liegt. Hier resultiert im Mittel ein Molekül des Typs X₂Y, fokale Gruppe ist hier eine OH-Gruppe. In der Formel (IV) haben R und R¹ die gleiche Bedeutung wie oben in den Formeln (I) bis (III).

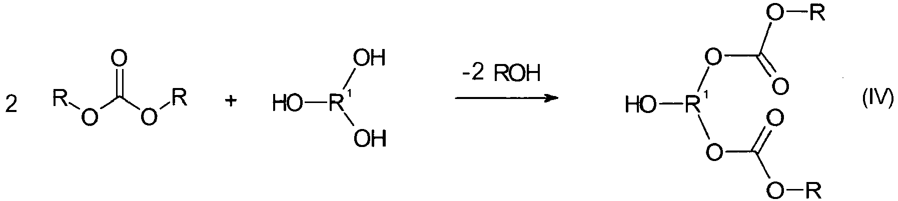

Werden zu den Komponenten zusätzlich difunktionelle Verbindungen, z.B ein Dicarbonat oder ein Diol gegeben, so bewirkt dies eine Verlängerung der Ketten, wie beispielsweise in der allgemeinen Formel (V) veranschaulicht. Es resultiert wieder im Mittel ein Molekül des Typs XY₂, fokale Gruppe ist eine Carbonatgruppe.

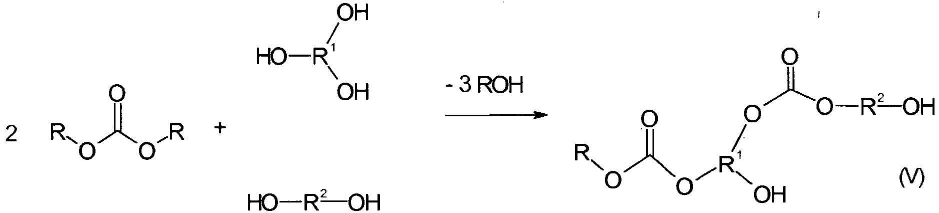

In Formel (V) bedeutet R² einen aliphatischen oder aromatischen Rest, R und R¹ sind wie vorstehend beschrieben definiert.

Es können auch mehrere Kondensationsprodukte (K) zur Synthese eingesetzt werden. Hierbei können einerseits mehrere Alkohole beziehungsweise mehrere Carbonate eingesetzt werden. Weiterhin lassen sich durch die Wahl des Verhältnisses der eingesetzten Alkohole und der Carbonate bzw. der Phosgene Mischungen verschiedener Kondensationsprodukte unterschiedlicher Struktur erhalten. Dies sei am Beispiel der Umsetzung eines Carbonates mit einem dreiwertigen Alkohol beispielhaft erläutert. Setzt man die Ausgangsprodukte im Verhältnis 1:1 ein, wie in (II) dargestellt, so erhält man ein Molekül XY₂. Setzt man die Ausgangsprodukte im Verhältnis 2:1 ein, wie in (IV) dargestellt, so erhält man ein Molekül X₂Y. Bei einem Verhältnis zwischen 1:1 und 2:1 erhält man eine Mischung von Molekülen XY₂ und X₂Y.

Typische **Reaktionsbedingungen** der Umsetzung von (A) mit (B) zum Kondensationsprodukt (K) sind im folgenden dargestellt:

Die **Stöchiometrie** der Komponenten (A) und (B) wird generell so gewählt, daß das resultierende Kondensationsprodukt (K) entweder eine Carbonat- oder Carbamoylchloridgruppe und mehr als eine OH-Gruppe oder eine OH-Gruppe und mehr als eine Carbonat- oder Carbamoylchloridgruppe aufweist. Dies wird im ersten Fall erreicht durch eine Stöchiometrie von 1 mol Carbonatgruppen : >2 mol OH-Gruppen, beispielsweise eine Stöchiometrie von 1 : 2,1 bis 8, bevorzugt 1 : 2,2 bis 6, besonders bevorzugt 1 : 2,5 bis 4 und ganz besonders bevorzugt 1 : 2,8 bis 3,5. Im zweiten Fall wird dies erreicht durch eine Stöchiometrie von mehr als 1 mol Carbonatgruppen : <1 mol OH-Gruppen, beispielsweise eine Stöchiometrie von 1 : 0,1 bis 0,48, bevorzugt 1 : 0,15 bis 0,45, besonders bevorzugt 1 : 0,25 bis 0,4 und ganz besonders bevorzugt 1 : 0,28 bis 0,35.

Die **Temperatur** sollte ausreichend für die Umsetzung des Alkohols mit der entsprechenden Carbonylkomponente sein. In der Regel ist für die Umsetzung mit einem Phosgen eine Temperatur von -20 °C bis 120 °C, bevorzugt 0 bis 100 und besonders bevorzugt 20 bis 80 °C ausreichend. Bei Einsatz eines Carbonats sollte die Temperatur 60 bis 280 °C, bevorzugt 80 bis 250 °C, besonders bevorzugt 100 bis 250 °C und ganz besonders bevorzugt 120 bis 250 °C betragen.

Die Herstellung erfolgt zumeist in einem **Druckbereich** von 0,1 mbar bis 20 bar, bevorzugt bei 1 mbar bis 5 bar, in Reaktoren oder Reaktorkaskaden, die im Batchbetrieb, halbkontinuierlich oder kontinuierlich betrieben werden.

**Als Lösungsmittel** kommen aromatische und/oder (cyclo)aliphatische Kohlenwasserstoffe und deren Gemische, halogenierte Kohlenwasserstoffe, Ketone, Ester und Ether in Frage, bevorzugt Butylacetat, Dimethylformamid, Dimethylacetamid, Dimethylsulfoxid, Methoxypropylacetat, iso-Butylmethylketon, 2-Butanon, aromatische Kohlenwasserstoffe (wie Solvesso®-Marken), Cyclohexan, Chlorbenzol und Xylol. Es stellt eine bevorzugte Ausführungsform dar, die Reaktion ohne Lösungsmittel durchzuführen.

Die **Reihenfolge** der Zugabe der einzelnen Komponenten spielt zumeist eine untergeordnete Rolle. In der Regel ist es sinnvoll die Überschußkomponente der beiden Reaktionspartner vorzulegen und die Unterschußkomponente zuzugeben. Alternativ ist es ebenfalls möglich, die beiden Komponenten vor Reaktionsbeginn miteinander zu vermischen und diese Gemisch anschließend auf die erforderliche Reaktionstemperatur aufzuheizen.

Die beispielhaft in den Formeln (I) - (V) beschriebenen einfachen Kondensationsprodukte (K) reagieren erfindungsgemäß bevorzugt sofort intermolekular weiter unter Bildung von hochfunktionellen Polykondensationsprodukten, im folgenden **Polykondensationsprodukte** (P) genannt. Die Umsetzung zum Kondensationsprodukt (K) und zum Polykondensationsprodukt (P) erfolgt üblicherweise bei einer Temperatur von 0 bis 300 °C, bevorzugt 0 bis 250°C, besonders bevorzugt bei 60 bis 250°C und ganz besonders bevorzugt bei 80 bis 250°C in Substanz oder in Lösung. Dabei können allgemein alle Lösungsmittel verwendet werden, die gegenüber den jeweiligen Edukten inert sind. Bevorzugt verwendet werden organische Lösungsmittel, wie zum Beispiel die oben genannten und besonders bevorzugt Decan, Dodecan, Cyclohexan, Benzol, Toluol, Chlorbenzol, Xylol, Dimethylformamid, Dimethylacetamid, Dimethylsulfoxid oder Solventnaphtha. In einer bevorzugten Ausführungsform wird die Kondensationsreaktion in Substanz durchgeführt. Der bei der Reaktion freiwerdende monofunktionelle Alkohol oder das Phenol ROH kann zur Beschleunigung der Reaktion aus dem Reaktionsgleichgewicht entfernt werden, zum Beispiel destillativ, gegebenenfalls bei vermindertem Druck.

Die Abtrennung des Alkohols oder Phenols kann auch durch Durchleiten eines unter den Reaktionsbedingungen im wesentlichen inerten Gasstromes (Strippen), wie z.B. Stickstoff, Wasserdampf, Kohlenstoffdioxid oder auch eines sauerstoffhaltigen Gases, wie z.B. Luft oder Magerluft, unterstützt werden. Falls Abdestillieren vorgesehen ist, ist es regelmäßig empfehlenwert, solche Carbonate einzusetzen, welche bei der Umsetzung Alkohole oder Phenole ROH mit einem Siedepunkt von weniger als 140°C bei dem vorliegenden Druck freisetzen. Alternativ können die freigesetzten Alkohole durch azeotrope Destillation mittels Schleppmittel (z.B. Toluol, Xylol, Chlorbenzol, Cyclohexan) oder durch Anlegen eines Vakuums entfernt und damit die Bildung des Polykondensats unterstützt werden.

Zur Beschleunigung der Reaktion können auch **Katalysatoren** oder Katalysatorgemische zugegeben werden. Geeignete Katalysatoren sind Verbindungen, die Veresterungs- oder Umesterungsreaktionen katalysieren, zum Beispiel Alkalihydroxide, Alkalicarbonate, Alkalihydrogencarbonate, vorzugsweise des Natriums, Kaliums oder Cäsiums, tertiäre Amine, Guanidine, Ammoniumverbindungen, Phosphoniumverbindungen, Aluminium-, Zinn-, Zink, Titan-, Zirkon- oder Wismut-organische Verbindungen, weiterhin sogenannte Doppelmetallcyanid (DMC)-Katalysatoren, wie zum Beispiel in der DE 10138216 oder in der DE 10147712 beschrieben. Vorzugsweise werden Kaliumhydroxid, Kaliumcarbonat, Kaliumhydrogencarbonat, Diazabicyclooctan (DABCO), Diazabicyclononen (DBN), Diazabicycloundecen (DBU), Imidazole, wie Imidazol, 1-Methylimidazol oder 1,2-Dimethylimidazol, Titan-tetrabutylat, Titan-tetraisopropylat, Dibutylzinnoxid, Dibutylzinn-dilaurat, Zinndioctoat, Zirkonacetylacetonat oder Gemische davon eingesetzt. Die Zugabe des Katalysators erfolgt im allgemeinen in einer Menge von 50 bis 10000, bevorzugt von 100 bis 5000 Gew. ppm bezogen auf die Menge des eingesetzten Alkohols oder Alkoholgemisches. Gegebenenfalls kann es erforderlich sein, den Katalysator in geringen Mengen eines geeigneten Lösungsmittels vorzulösen.

Ferner ist es auch möglich, sowohl durch Zugabe des geeigneten Katalysators, als auch durch Wahl einer geeigneten Temperatur die intermolekulare Polykondensationsreaktion zu steuern. Weiterhin lässt sich über die Zusammensetzung der Ausgangskomponenten und über die Verweilzeit das mittlere Molekulargewicht des Polymeren (P) einstellen.

Die **Kondensationsprodukte (K) bzw. die Polykondensationsprodukte** (P), die bei erhöhter Temperatur hergestellt wurden, sind bei Raumtemperatur üblicherweise über einen längeren Zeitraum, beispielsweise über mindestens 6 Wochen, stabil, ohne Trübungen, Ausfällungen und/oder einen Viskositätsanstieg zu zeigen. Aufgrund der Beschaffenheit der Kondensationsprodukte (K) ist es möglich, daß aus der Kondensationsreaktion Polykondensationsprodukte (P) mit unterschiedlichen Strukturen resultieren können, die Verzweigungen, aber keine Vernetzungen aufweisen. Ferner weisen die Polykondensationsprodukte (P) im Idealfall entweder eine Carbonat- oder Carbamoylchloridgruppe als fokale Gruppe und mehr als zwei OH-Gruppen oder aber eine OH-Gruppe als fokale Gruppe und mehr als zwei Carbonat- oder Carbamoylchloridgruppen auf. Die Anzahl der reaktiven Gruppen ergibt sich dabei aus der Beschaffenheit der eingesetzten Kondensationsprodukte (K) und dem Polykondensationsgrad.

Beispielsweise kann ein Kondensationsprodukt (K) gemäß der allgemeinen Formel (II) durch dreifache intermolekulare Kondensation zu zwei verschiedenen Polykondensationsprodukten (P), die in den allgemeinen Formeln (VI) und (VII) wiedergegeben werden, reagieren.

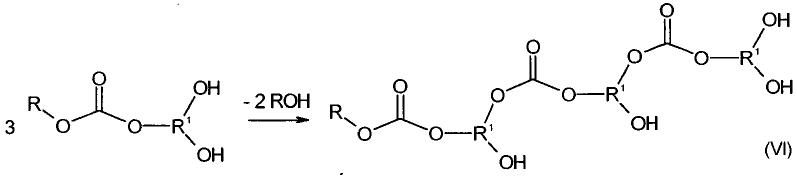

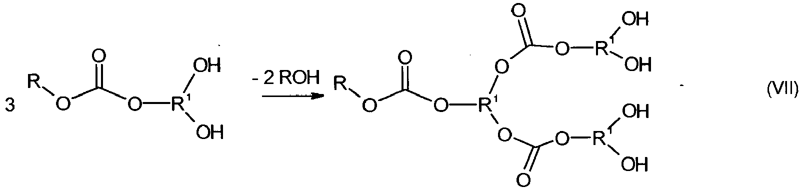

In Formel (VI) und (VII) sind R und R¹ wie vorstehend definiert.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Produkt (K) oder das Polykondensationsprodukt (P) lagerstabil ist. Dies ist in der Regel unterhalb von 60 °C, bevorzugt unter 50 °C, besonders bevorzugt unterhalb von 40 °C und ganz besonders bevorzugt bei Raumtemperatur der Fall. Weiterhin kann man den Katalysator desaktivieren, bei basischen Katalysatoren zum Beispiel durch Zugabe einer sauren Komponente, zum Beispiel einer Lewis-Säure oder einer organischen oder anorganischen Protonensäure. Ferner ist es möglich, die Reaktion durch Verdünnen mit einem vorgekühlten Lösungsmittel zu stoppen. Dies ist insbesondere dann bevorzugt, wenn man die Viskosität des Reaktionsgemischs durch Zugabe von Lösungsmittel anpassen muß.

In einer weiteren Ausführungsform kann, sobald aufgrund der intermolekularen Reaktion des Kondensationsproduktes (K) ein Polykondensationsprodukt (P) mit gewünschten Polykondensationsgrad vorliegt, dem Produkt (P) zum **Abbruch der Reaktion** ein Produkt mit gegenüber der fokalen Gruppe von (P) reaktiven Gruppen zugesetzt werden. So kann bei einer Carbonatgruppe bzw. Carbamoylgruppe als fokaler Gruppe zum Beispiel ein Mono-, Di- oder Polyamin zugegeben werden. Bei einer Hydroxylgruppe als fokaler Gruppe kann dem Produkt (P) beispielsweise ein Mono-, Di- oder Polyisocyanat, eine Epoxydgruppen enthaltende Verbindung oder ein mit OH-Gruppen reaktives Säurederivat zugegeben werden.

Durch die vorgenannte Einstellung der Reaktionsbedingungen und gegebenenfalls durch die Wahl des geeigneten Lösemittels können die erfindungsgemäßen Produkte nach der Herstellung **ohne weitere Reinigung weiterverarbeitet** werden. Falls erforderlich kann das Reaktionsgemisch einer **Entfärbung**, beispielsweise durch Behandlung mit Aktivkohle oder Metalloxiden, wie z.B. Aluminiumoxid, Siliciumoxid, Magnesiumoxid, Zirkonoxid, Boroxid oder Gemischen davon, in Mengen von beispielsweise 0,1 - 50 Gew%, bevorzugt 0,5 bis 25 Gew%, besonders bevorzugt 1 - 10 Gew% bei Temperaturen von beispielsweise 10 bis 100 °C, bevorzugt 20 bis 80 °C und besonders bevorzugt 30 bis 60 °C unterworfen werden. Gegebenenfalls kann das Reaktionsgemisch auch zur Entfernung von eventuell vorhandenen Ausfällungen filtriert werden. In einer weiteren bevorzugten Ausführungsform wird das Produkt **gestrippt**, das heißt von niedermolekularen, flüchtigen Verbindungen befreit. Dazu kann nach Erreichen des gewünschten Umsatzgrades der Katalysator optional desaktiviert und die niedermolekularen flüchtigen Bestandteile, zum Beispiel Monoalkohole, Phenole, Carbonate, Chlorwasserstoff oder leichtflüchtige oligomere oder cyclische Verbindungen destillativ, gegebenenfalls unter Einleitung eines Gases, vorzugsweise Stickstoff, Kohlendioxid oder Luft, gegebenenfalls bei vermindertem Druck, entfernt werden.

Die hyperverzweigten Polycarbonate, die wie vorstehend beschrieben erhältlich sind, weisen in der Regel eine **Glasübergangstemperatur** von weniger als 50 °C, bevorzugt weniger als 30 °C und besonders bevorzugt weniger als 10 °C auf. Die OH-Zahl beträgt meist mindestens 30 mg KOH/g , bevorzugt zwischen 50 und 250 mg/g. Das gewichtsmittlere **Molgewicht** M_{w} liegt zumeist zwischen 1.000 und 150.000, bevorzugt von 1500 bis 100.000 g/mol, das zahlenmittlere Molgewicht Mₙ zwischen 500 und 50.000, bevorzugt zwischen 1.000 und 40.000 g/mol. Das hyperververzweigte Polycarbonat ist meist nicht löslich oder dispergierbar in Wasser, das heißt, dass es nicht möglich ist eine klare (d.h. ohne Partikel, die mit dem blossen Auge erkennbar sind) wässrige Lösung oder Dispersion herzustellen.

Das Amphiphil enthält bevorzugt ein **alkoxyliertes**, hyperverzweigtes Polycarbonat. Der Begriff "alkoxyliert" bedeutet, dass das hyperverzweigte Polycarbonat mit einem Alkylenoxid umgesetzt wurde. Dadurch enthält das Polycarbonat mindestens eine lineare Polyalkylenoxid-Gruppe. Dabei können statistische Mischungen oder Blöcke der Monomere auftreten, bevorzugt Blöcke. Bevorzugt ist das alkoxylierte Polycarbonat entweder ausschließlich mit Ethylenoxid oder aber mit einer Mischung aus Ethylenoxid und C₃-C₅ Alkylenoxid alkoxyliert. Besonders bevorzugt ist es ausschließlich mit Ethylenoxid alkoxyliert. Geeignete C₃-C₅ Alkylenoxide sind Propylenoxid, Butylenoxid oder Pentylenoxid, sowie deren Mischungen. Bevorzugtes C₃-C₅ Alkylenoxid ist Propylenoxid. Mischungen aus Ethylenoxid und C₃-C₅ Alkylenoxid enthalten bevorzugt mindestens 40 Mol% Ethylenoxid, besonders bevorzugt mindestens 60 Mol%, und insbesondere mindestens 80 Mol%, jeweils bezogen auf die Gesamtmolzahl von Ethylenoxid und C₃-C₅ Alkylenoxid in der Mischung. Besonders bevorzugt ist das alkoxylierte Polycarbonat mit einer Mischung aus Ethylenoxid und C₃-C₅ Alkylenoxid alkoxyliert, wobei Blöcke von Ethylenoxid und von C₃-C₅ Alkylenoxid erzeugt werden.

In einer weiteren bevorzugten Ausführungsform enthält das Polycarbonat mindestens eine durch Alkoxylierung hergestellte Polyalkylenoxid-Gruppe. Die Polyalkylenoxid-Gruppe umfasst besonders bevorzugt mindestens einen Block Polyethylenoxid und mindestens einen Block Poly(C₃-C₅ alkylenoxid), wobei letzerer bevorzugt Polypropylenoxid ist. Der Block Poly(C₃-C₅ alkylenoxid) ist speziell bevorzugt direkt mit dem hyperverzweigten Polycarbonat verbunden. Der Block Polyethylenoxid ist speziell bevorzugt nicht direkt mit dem Polycarbonat verbunden, sondern ausschließlich mit dem Poly(C₃-C₅ alkylenoxid). Geeignete C₃-C₅ Alkylenoxide für das Poly(C₃-C₅ alkylenoxid) sind wie oben beschrieben. Die Blockstrukturen sind erhältlich, indem das hyperverzweigte Polycarbonat zunächst mit C₃-C₅ Alkylenoxid und das so erhaltene Reaktionsprodukt nachfolgend mit Ethylenoxid alkoxyliert wird.

Das **Gewichtsverhältnis** der Summe aus C₃-C₁₂ Alkylenoxid (resultierend aus dem mindestens tri- oder höherfunktionellen Polyetherol) und C₃-C₅ Alkylenoxid (resultierend aus der Alkoxylierung des hyperverzweigten Polycarbonats) zu Ethylenoxid liegt meist im Bereich von 3 zu 1 bis 1 zu 3, bevorzugt liegt es im Bereich von 2,5 zu 1 bis 1 zu 2,5, und insbesondere von 2 zu 1 bis 1 zu 2. Die Alkoxylierung des Polycarbonats kann durch das erfindungsgemäße Verfahren zur Herstellung des Amphiphils erfolgen.

Das alkoxylierte, hyperverzweigte Polycarbonat ist bevorzugt **wasserlöslich**. Das heißt, es ist zu mindestens 2 Gew.%, bevorzugt 8 Gew.% und insbesondere zu mindestens 15 Gew.% in Wasser bei 20 °C löslich.

In einer weiteren Ausführungsform ist das alkoxylierte, hyperverzweigte Polycarbonat ist meist **wasserdispergierbar**. Das heißt, es ist zu mindestens 2 Gew.%, bevorzugt 8 Gew.% und insbesondere zu mindestens 15 Gew.% in Wasser bei 20 °C dispergierbar.

Das alkoxylierte, hyperverzweigte Polycarbonat hat meist eine OH-Zahl von 1 bis 150 mg KOH pro g Polymer, bevorzugt 10 bis 120 mg KOH/g, insbesondere 20 bis 100 mg KOH/g.

Die erfindungsgemäße Zusammensetzung enthält meist 0,01 bis 40 Gew.%, bevorzugt 0,05 bis 30 Gew.%, besonders bevorzugt 0,1 bis 20 Gew.% Amphiphil.

Die erfindungsgemäße **Zusammensetzung ist erhältlich** indem man das Amphiphil und den Wirkstoff, der in Wasser bei 20 °C zu höchstens 10 g/L löslich ist, in Kontakt bringt. Die Komponenten können durch allgemein bekannte Methoden, wie Mischen, Emulgieren oder Suspendieren, in Kontakt gebracht werden.

Das **Gewichtsverhältnis** von Wirkstoff zu Amphiphil liegt meist im Bereich von 100 : 1 bis 1 : 100, bevorzugt 10 : 1 bis 1 : 50, besonders bevorzugt 2 : 1 bis 1 : 25. Der Wirkstoff kann in gelöster Form oder in fester, partikulärer Form vorliegen. Die Wirkstoffpartikel können kristallin oder amorph sein. Die Partikelgröße kann 1 nm bis 10 µm betragen. Die Zusammensetzung kann eine Lösung, Emulsion, Suspension oder Suspoemulsion des Wirkstoffs sein. Die erfindungsgemäße Zusammensetzung ist bevorzugt eine wässrige Zusammensetzung. Bevorzugt enthält sie mindestens 40 Gew.%, besonders bevorzugt mindestens 60 Gew.%, und insbesondere mindestens 80 Gew.% Wasser. Üblicherweise enthält die Zusammensetzung höchstens 99 Gew.% Wasser.

Die erfindungsgemäße Zusammensetzung kann **Formulierungshilfsmittel** enthalten, wobei sich die Wahl der Hilfsmittel üblicherweise nach der konkreten Anwendungsform bzw. dem Wirkstoff richtet. Beispiele für geeignete Formulierungshilfsmittel sind Lösungsmittel, feste Trägerstoffe, oberflächenaktive Stoffe (wie Tenside, Schutzkolloide, Netzmittel und Haftmittel), organische und anorganische Verdicker, Bakterizide, Frostschutzmittel, Entschäumer, ggf. Farbstoffe und Kleber (z. B. für Saatgutbehandlung).

Als **oberflächenaktive Stoffe** (Adjuvantien, Netz-, Haft-, Dispergier- oder Emulgiermittel) kommen die Alkali-, Erdalkali-, Ammoniumsalze von aromatischen Sulfonsäuren, z. B. von Lignin-(Borresperse^{®}-Typen, Borregaard, Norwegen), Phenol-, Naphthalin-(Morwet^{®}-Typen, Akzo Nobel, USA) und Dibutylnaphthalinsulfonsäure (Nekal®-Typen, BASF, Deutschland), sowie von Fettsäuren, Alkyl- und Alkylarylsulfonaten, Alkyl-, Laurylether- und Fettalkoholsulfaten, sowie Salze sulfatierter Hexa-, Hepta- und Octadecanole sowie von Fettalkoholglykolethern, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylen- oder Polyoxypropylenalkylether, Laurylalkoholpolyglykoletheracetat, Sorbitester, Lignin-Sulfitablaugen sowie Proteine, denaturierte Proteine, Polysaccharide (z.B. Methylcellulose), hydrophob modifizierte Stärken, Polyvinylalkohol (Mowiol^{®}-Typen, Clariant, Schweiz), Polycarboxylate (Sokalan^{®}-Typen, BASF, Deutschland), Polyalkoxylate, Polyvinylamin (Lupamin^{®}-Typen, BASF, Deutschland), Polyethylenimin (Lupasol^{®}-Typen, BASF, Deutschland), Polyvinylpyrrolidon und deren Copolymere in Betracht.

Als **Tenside** kommen insbesondere anionische, kationische, nicht-ionische und amphotere Tenside, Blockpolymere und Polyelektrolyte in Betracht. Geeignete **anionische** Tenside sind Alkali-, Erdalkali- oder Ammoniumsalze von Sulfonaten, Sulfaten, Phosphaten oder Carboxylaten. Beispiele für Sulfonate sind Alkylarylsulfonate, Diphenylsulfonate, alpha-Olefinsulfonate, Sulfonate von Fettsäuren und Ölen, Sulfonate von ethoxylierten Alkylphenolen, Sulfonate von kondensierten Naphthalinen, Sulfonate von Dodecyl und Tridecylbenzolen, Sulfonate von Naphthalinen und Alkylnaphthalinen, Sulfosuccinate oder Sulfosuccinamate. Beispiele für Sulfate sind Sulfate von Fettsäuren und Ölen, von ethoxylierten Alkylphenolen, von Alkoholen, von ethoxylierten Alkoholen, oder von Fettsäureestern. Beispiele für Phosphate sind Phosphatester. Beispiele für Carboxylate sind Alkylcarboxylate und carboxylierte Alkohol- oder Alkylphenolethoxylate.

Geeignete nicht-ionische Tenside sind Alkoxylate, N-alkylierte Fettsäureamide, Aminoxide, Ester oder Zucker-basierte Tenside. Beispiele für Alkoxylate sind Verbindungen, wie Alkohole, Alkylphenole, Amine, Amide, Arylphenole, Fettsäuren oder Fettsäureester, die alkoxyliert wurden. Zur Alkoxylierung kann Ethylenoxid und/oder Propylenoxid eingesetzt werden, bevorzugt Ethylenoxid. Beispiele für N-alkylierte Fettsäureamide sind Fettsäureglucamide oder Fettsäurealkanolamide. Beispiele für Ester sind Fettsäureester, Glycerinester oder Monoglyceride. Beispiele für Zucker-basierte Tenside sind Sorbitane, ethoxilierte Sorbitane, Saccharose- und Glucoseester oder Alkylpolyglucoside. Geeignete **kationische** Tenside sind quarternäre Tenside, beispielsweise quartäre Ammonium-Verbindungen mit einer oder zwei hydrophoben Gruppen, oder Salze langkettiger primärer Amine. Geeignete **amphotere** Tenside sind Alkylbetaine und Imidazoline. Geeignete **Blockpolymere** sind Blockpolymere vom A-B oder A-B-A Typ umfassend Blöcke aus Polyethylenoxid und Polypropylenoxid oder vom A-B-C Typ umfassend Alkanol, Polyethylenoxid und Polypropylenoxid. Geeignete **Polyelektrolyte** sind Polysäuren oder Polybasen. Beispiele für Polysäuren sind Alkalisalze von Polyacrylsäure. Beispiele für Polybasen sind Polyvinylamine oder Polyethylenamine.

Die erfindungsgemäße Zusammensetzung kann hohe Mengen oberflächenaktiver Stoffe und Tensid umfassen. Sie kann 0,1 bis 40 Gew.%, bevorzugt 1 bis 30 und insbesondere 2 bis 20 Gew.% Gesamtmenge von oberflächenaktiven Stoffe und Tensiden umfassen bezogen auf die Gesamtmenge der Zusammensetzung.

Beispiele für **Adjuvantien** sind organisch modifizierte Polysiloxane, wie BreakThruS 240^{®}; Alkoholalkoxylate, wie Atplus^{®}245, Atplus^{®}MBA 1303, Plurafac^{®}LF und Lutensol^{®} ON ; EO-PO-Blockpolymerisate, z. B. Pluronic^{®} RPE 2035 und Genapol^{®} B; Alkoholethoxylate, z. B. Lutensol^{®} XP 80; und Natriumdioctylsulfosuccinat, z. B. Leophen^{®} RA. Beispiele für **Verdicker** (d. h. Verbindungen, die der Zusammensetzung ein modifiziertes Fließverhalten verleihen, d. h. hohe Viskosität im Ruhezustand und niedrige Viskosität im bewegten Zustand) sind Polysaccharide sowie organische und anorganische Schichtmineralien wie Xanthan Gum (Kelzan^{®}, CP Kelco), Rhodopol^{®} 23 (Rhodia) oder Veegum^{®} (R.T. Vanderbilt) oder Attactay^{®} (Engelhard Corp.).

In einer bevorzugten Ausführungsform ist der Wirkstoff ein Pestizid und die erfindungsgemäßen Zusammensetzungen liegen in Form einer **agrochemischen Formulierung** vor. Geeignete agrochemische Formulierungen sind wasserlösliche Konzentrate (SL, LS), redispergierbare Konzentrate (DC), emulgierbare Konzentrate (EC), Emulsionen (EW, EO, ES, ME), Suspensionen (SC, OD, FS) oder Suspoemulsionen (SE). Bevorzugt liegt die Zusammensetzung vor in Form eines emulgierbaren Konzentrates (EC), eines Suspensionskonzentrats (SC), eines wasserlöslichen Konzentrats (SL), einer Lösung für Saatgutbehandlung (LS), oder eines redispergierbaren Konzentrats (DC).

Die agrochemische Formulierung wird meist vor der Anwendung verdünnt, um den sogenannten **Tankmix** herzustellen. Zur Verdünnung kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon oder Wasser in Betracht. Bevorzugt wird Wasser verwendet. Es ist auch möglich, das Amphiphil erst dem Tankmix zuzusetzen. In dieser Ausführungsform liegt die erfindungsgemäße Zusammensetzung in Form eines Tankmixes vor.

Die verdünnte Zusammensetzung wird üblicherweise durch Versprühen oder Vernebeln angewendet. Zu dem Tankmix können Öle verschiedenen Typs, Netzmittel, Adjuvants, Herbizide, Bakterizide, Fungizide unmittelbar vor der Anwendung (Tankmix) zugesetzt werden. Diese Mittel können zu den erfindungsgemäßen Zusammensetzungen im Gewichtsverhältnis 1:100 bis 100:1, bevorzugt 1:10 bis 10:1 zugemischt werden. Die Pestizidkonzentration im Tankmix kann in größeren Bereichen variiert werden. Im Allgemeinen liegen sie zwischen 0,0001 und 10%, vorzugsweise zwischen 0,01 und 1 %. Die Aufwandmengen liegen bei der Anwendung im Pflanzenschutz je nach Art des gewünschten Effektes zwischen 0,01 und 2,0 kg Wirkstoff pro ha.

Die **Verwendung** der agrochemischen Formulierungen ist möglich **zur Bekämpfung** von phytopathogenen Pilzen und/oder unerwünschtem Pflanzenwuchs und/oder unerwünschtem Insekten- oder Milbenbefall und/oder zur Regulation des Wachstums von Pflanzen, wobei man die Zusammensetzung auf die jeweiligen Schädlinge, deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt. Weiterhin ist die Verwendung der agrochemischen Formulierungen möglich zur Bekämpfung von unerwünschtem Insekten- oder Milbenbefall auf Pflanzen und/oder zur Bekämpfung von phytopathogenen Pilzen und/oder zur Bekämpfung unerwünschten Pflanzenwuchs, wobei man Saatgüter von Nutzpflanzen mit der Zusammensetzung behandelt.

Die Erfindung betrifft auch ein **Amphiphil** enthaltend ein alkoxyliertes, hyperverzweigtes Polycarbonat, wobei das Polycarbonat einen Alkohol (B1) enthält, der ein tri- oder höherfunktionelles Polyetherol ist auf Basis von einem C₃-C₁₂ Alkylenoxid und einem Alkohol, der mindestens drei OH-Gruppen aufweist. Das Amphiphil ist erhältlich, bevorzugt wird es erhalten, durch das erfindungsgemäße Verfahren zur Herstellung wie nachfolgend beschrieben. Das Polyetherol enthält mindestens drei Moleküle C₃-C₁₂ Alkylenoxid in polymerisierter Form. Das alkoxylierte Polycarbonat ist bevorzugt mit Ethylenoxid oder einer Mischung aus Ethylenoxid und C₃-C₅ Alkylenoxid alkoxyliert. Weitere geeignete und bevorzugte Ausführungsformen sind wie vorstehend beschrieben.

Die Erfindung betrifft auch ein Verfahren zur **Herstellung** des erfindungsgemäßen **Amphiphils**, indem man ein hyperverzweigtes Polycarbonat alkoxyliert, wobei das Polycarbonat einen Alkohol (B1) enthält, der ein tri- oder höherfunktionelles Polyetherol ist auf Basis von einem C₃-C₁₂ Alkylenoxid und einem Alkohol, der mindestens drei OH-Gruppen aufweist. Zur Alkoxylierung des Polycarbonats setzt man bevorzugt Ethylenoxid oder eine Mischung aus Ethylenoxid und C₃-C₅ Alkylenoxid ein. Das Gewichtsverhältnis der Summe aus C₃-C₁₂ Alkylenoxid und C₃-C₅ Alkylenoxid zu Ethylenoxid liegt meist im Bereich von 3 zu 1 bis 1 zu 3. Besonders bevorzugt wird das Polycarbonat zuerst mit C₃-C₅ Alkylenoxid alkoxyliert und danach mit Ethylenoxid.

Die **Alkoxylierung** kann nach den üblichen Reaktionsverfahren, beispielsweise in einem Druckautoklaven, durchgeführt werden. Die Alkoxylierung kann durch starke Basen, wie Alkalihydroxide und Erdalkalihydroxide, Brönstedsäuren oder Lewissäuren, wie AlCl₃, BF₃ etc. katalysiert werden. Für eng verteilte Alkoholalkoxylate können Katalysatoren wie Hydrotalcit oder DMC verwendet werden. Die Alkoxylierung erfolgt vorzugsweise bei Temperaturen im Bereich von etwa 80 bis 250 °C, bevorzugt etwa 100 bis 220 °C. Der Druck liegt vorzugsweise zwischen Umgebungsdruck und 600 bar. Gewünschtenfalls kann das Alkylenoxid eine Inertgasbeimischung, z. B. von etwa 5 bis 60 %, enthalten. Das Rohprodukt der Alkoxylierung kann ohne weitere Aufarbeitung verwendet werden in der erfindungsgemäßen Zusammensetzung. Optional kann es filtiert werden, z.B. zur Abtrennung von Katalysatorresten.

Die Erfindung betrifft weiterhin eine **Verwendung des erfindungsgemäßen Amphiphil** zur Solubilisierung eines Wirkstoffs, der in Wasser bei 20 °C zu höchstens 10 g/L löslich ist, in wässrigen Lösungen.

Die Erfindung betrifft weiterhin ein **Verfahren zur Bekämpfung von phytopathogenen** Pilzen und/oder unerwünschtem Pflanzenwuchs und/oder unerwünschtem Insekten- oder Milbenbefall und/oder zur Regulation des Wachstums von Pflanzen, wobei man die erfindungsgemäße Zusammensetzung auf die jeweiligen Schädlinge, deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt. Die Erfindungs betrifft auch eine Verwendung der erfindungsgemäßen Zusammensetzung zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen.

**Vorteile** der vorliegenden Erfindung sind, dass eine hohe Konzentration von Wirkstoff in Lösung gebracht werden kann; dass die Herstellung des Amphiphils aus kommerziell gut vefügbaren Monomeren sehr einfach und großtechnisch möglich ist, ggf. sogar in einem Eintopfverfahren. Weiterer Vorteil ist, dass das Amphiphil selbst wasserlöslich oder wasserdispergierbar ist und dass es weniger hydrolyseempfindlich ist als viele Polyester. Weitere Vorteile sind, dass die Bioverfügbartkeit der Wirkstoffe erhöht wird, dass der systemische Effekt der agrochemischen Wirkstoffe bei foliarer Aufnahme erhöht wird, dass sogar schwerlösliche agrochemische Wirkstoffe nun gelöst formuliert werden können, beispielsweise als SL (wasserlösliches Konzentrat) oder LS (Lösung für Saatgutbehandlung), dass die Verteilung der agrochemischen Wirkstoffe in der Sprühlösung verbessert ist, und dass die Mehrwegverpackungen der Wirkstoffe und die Applikationsgeräte (z.B. die Sprühgeräte für Pestizide) besser mit Wasser gereinigt werden können.

Nachfolgende Beispiele erläutern die Erfindung.

### Beispiele

Sowohl die unmodifizierten hyperverzweigten Polycarbonate als auch die alkoxylierten Polycarbonate wurden per Gelpermeationschromatographie mit einem Refraktometer als Detektor analysiert. Als mobile Phase wurde Dimethylacetamid verwendet, als Standard zur Bestimmung des Molekulargewichts wurde Polymethylmetacrylat (PMMA) eingesetzt. Die Bestimmung der OH-Zahl erfolgte nach DIN 53240, Teil 2.

### Beispiel 1A: Synthese hyperverzweigter Polycarbonat-Kern mit terminalen Hydroxylgruppen

Es wurden 2000 g TMP x 15,7 PO (Umsetzungsprodukt von Trimethylolpropan mit 15,7 molarem Überschuß Propylenoxid), 247 g Diethylcarbonat sowie 1,7 g Katalysator n-Dibutylzinn-dilaurat vorgelegt. Die Reaktionsmischung wurde auf 165 °C erhitzt und unter Rühren für 13 Stunden am Sieden gehalten, bis die Temperatur des Reaktionsgemisches durch die Siedekühlung des freiwerdenden Ethanols auf eine konstante Temperatur von 143 °C gefallen war. Nun wurde der Rückflusskühler durch eine absteigenden Kühler mit Auffanggefäß ersetzt und das bei der Reaktion entstandene Ethanol abdestilliert, wobei die Temperatur des Reaktionsgemisches bis auf 230 °C erhöht wurde. Das Ethanol wurde in einem gekühlten Rundkolben gesammelt, ausgewogen und der Umsatz so gegenüber dem theoretisch möglichen Vollumsatz prozentual ermittelt. Nach dem Erreichen eines Umsatzes von 89% wurde bei einer Temperatur von 160 °C für 3 Stunden trockener Stickstoff durch die Reaktionsmischung geleitet, um noch vorhandene Restmengen an Monomeren zu entfernen. Danach wurde der Ansatz auf Raumtemperatur abgekühlt. Das Polymer (Mn = 3000 g/mol; Mw = 6200 g/mol; OH-Zahl: 87 mg KOH/g Polymer) wurde in Form einer gelb gefärbten, hoch viskosen Flüssigkeit erhalten, welche nicht wasserlöslich war.

### Beispiel 1B: Synthese hyperverzweigter Polycarbonat-Kern mit terminalen Hydroxylgruppen

Es wurden 4010 g TMP x 15,7 PO (Umsetzungsprodukt von Trimethylolpropan mit 15,7 molarem Überschuß Propylenoxid) und 502 g Diethylcarbonat vorgelegt und mit einer frisch angesetzten Lösung von 2 g Kaliumhydroxid in 10 g Ethanol versetzt. Die Reaktionsmischung wurde auf 155 °C erhitzt und unter Rühren für 3,5 Stunden am Sieden gehalten, bis die Temperatur des Reaktionsgemisches durch die Siedekühlung des freiwerdenden Ethanols auf eine konstante Temperatur von 130 °C gefallen war. Nun wurde der Rückflusskühler durch eine absteigenden Kühler mit Auffanggefäß ersetzt und das bei der Reaktion entstandene Ethanol abdestilliert, wobei die Temperatur des Reaktionsgemisches bis auf 200 °C erhöht wurde. Das Ethanol wurde in einem gekühlten Rundkolben gesammelt, ausgewogen und der Umsatz so gegenüber dem theoretisch möglichen Vollumsatz prozentual ermittelt. Nach dem Erreichen eines Umsatzes von 80% wurde die Reaktion auf 100 °C abgekühlt und mit 4 g 80%iger Phosphorsäure als Stopper versetzt. Nachfolgend wurde unter Rühren auf 135 °C erhitzt und bei dieser Temperatur für 5 Stunden trockener Stickstoff durch die Reaktionsmischung geleitet, um noch vorhandene Restmengen an Monomeren zu entfernen. Danach wurde der Ansatz auf Raumtemperatur abgekühlt. Das Polymer (Mn = 2450 g/mol; Mw = 5330 g/mol; OH-Zahl: 92 mg KOH/g Polymer) wurde in Form einer gelb gefärbten, hoch viskosen Flüssigkeit erhalten, welche nicht wasserlöslich war.

### Beispiel 1C: Ethoxylierung von hyperverzweigtem Polycarbonat-Kern aus Beispiel 1A

100 g Polymer aus Beispiel 1A wurden in einem Druckautoklaven vorgelegt und mit 1,35 g einer 50 %igen wässrigen KOH-Lösung versetzt. Nachdem die Reaktionsmischung mit Stickstoff inertisiert worden war, wurde der Ansatz unter Vakuum bei 120 °C von Wasserresten befreit. Anschließend wurden der Reaktionsmischung 100 g Ethylenoxid mit einer Dosierrate von 0,5 mL/min bei 120 °C zugefügt. Nach beendeter Ethylenoxid-Dosierung und Erreichen eines konstanten Reaktordrucks wurden nicht umgesetztes Ethylenoxid und andere flüchtige Bestandteile im Vakuum abdestilliert und das ethoxylierte Polymer aus dem Polymerisationsreaktor entnommen. Anschließend wurde das Rohprodukt in einer separaten Reaktionsapparatur mit 5 % Makrosorb® (PQ Corp.; Magnesiumsilikat zur Entfernung von Alkaliresten) und 2 % Wasser versetzt, für 1 Stunde auf 80 °C erwärmt und das zugesetzte Wasser nachfolgend unter Vakuum von der Reaktionsmischung wieder abdestilliert. Die Filtration des Rohprodukts lieferte 190 g ethoxylierten Polymers (Mn = 4860 g/mol; Mw = 12980 g/mol; OH-Zahl: 47 mg KOH/g Polymer) in Form einer schwach gelb gefärbten, hoch viskosen Flüssigkeit, welche vollständig wasserlöslich war.

### Beispiel 2:

### Solubilisierung von Wirkstoffen

In einem 50 mL Becherglas wurden 100 mg Polymer eingewogen und in 9,900 g dest. Wasser gelöst. Anschließend wurde dem Ansatz jeweils 100 mg Wirkstoff zugewogen, um eine übersättigte Lösung zu erhalten. Das Gemisch wurde nun 24 h bei Raumtemperatur mit Hilfe eines Taumelmischers gerührt. Nach einstündiger Ruhezeit wurde nicht solubilisierter Wirkstoff durch Zentrifugieren abgetrennt. Die so erhaltene, klare Lösung wurde anschließend auf ihren Wirkstoffgehalt mittels UV-Spektroskopie untersucht. Die Wirkstoffe wurden bei folgenden Wellenlängen analysiert: Pyren bei 334 nm, Pyraclostrobin bei 277 nm, Fipronil bei 280 nm.

**Tabelle 1:**

| Löslichkeit [mg/l] in Gegenwart von | Pyren | Pyraclostrobin | Fipronil |
|---|---|---|---|
| Ohne Polymer ^{a)} | 0,1 | 22,5 | 3 |
| Polymer aus Beispiel 1A^{a)} | _ ^{b)} | _ ^{b)} | _ ^{b)} |
| Polymer aus Beispiel 1C | 22 | 95 | 8 |

| | | | |
|---|---|---|---|
| a) nicht erfindungsgemäß; b) 1 UU mg Polymer loste sich nicht auf in 9,9 g Wasser. | | | |

## Patentansprüche

1. Zusammensetzung enthaltend einen Wirkstoff, der in Wasser bei 20 °C zu höchstens 10 g/L löslich ist, und ein Amphiphil umfassend ein alkoxyliertes, hyperverzweigtes Polycarbonat, wobei das Polycarbonat einen Alkohol (B1) enthält, der ein tri- oder höherfunktionelles Polyetherol ist auf Basis von einem C₃-C₁₂ Alkylenoxid und einem Alkohol, der mindestens drei OH-Gruppen aufweist, wobei das Polyetherol mindestens drei Moleküle C₃-C₁₂ Alkylenoxid in polymerisierter Form enthält.

2. Zusammensetzung nach Anspruch 1, wobei der Wirkstoff einen agrochemischen Wirkstoff, kosmetischen Wirkstoff, pharmazeutischen Wirkstoff oder Nahrungsergänzungsmittel enthält.

3. Zusammensetzung nach Anspruch 1 oder 2, wobei das C₃-C₁₂ Alkylenoxid Propylenoxid ist.

4. Zusammensetzung nach einem der Ansprüche 1 bis 3, wobei der Alkohol, der mindestens drei OH-Gruppen aufweist, Glycerin, Trimethylolethan, Trimethylolpropan, 1,2,4-Butantriol, 1,2,3-Hexantriol, 1,2,4-Hexantriol oder Pentaerythrit ist.

5. Zusammensetzung nach einem der Ansprüche 1 bis 4, wobei das alkoxylierte Polycarbonat mit Ethylenoxid oder einer Mischung aus Ethylenoxid und C₃-C₅ Alkylenoxid alkoxyliert ist.

6. Zusammensetzung nach Anspruch 5, wobei das Gewichtsverhältnis der Summe aus C₃-C₁₂ Alkylenoxid und C₃-C₅ Alkylenoxid zu Ethylenoxid im Bereich von 3 zu 1 bis 1 zu 3 liegt.

7. Zusammensetzung nach einem der Ansprüche 1 bis 6, wobei der Wirkstoff ein agrochemischer Wirkstoff ist.

8. Amphiphil enthaltend ein alkoxyliertes, hyperverzweigtes Polycarbonat, wobei das Polycarbonat einen Alkohol (B1) enthält, der ein tri- oder höherfunktionelles Polyetherol ist auf Basis von einem C₃-C₁₂ Alkylenoxid und einem Alkohol, der mindestens drei OH-Gruppen aufweist.

9. Amphiphil nach Anspruch 8, wobei das Polyetherol mindestens drei Moleküle C₃-C₁₂ Alkylenoxid in polymerisierter Form enthält.

10. Amphiphil nach Anspruch 8 oder 9, wobei das alkoxylierte Polycarbonat mit Ethylenoxid oder einer Mischung aus Ethylenoxid und C₃-C₅ Alkylenoxid alkoxyliert ist.

11. Verfahren zur Herstellung des Amphiphils gemäß einem der Ansprüche 8 bis 10, indem man ein hyperverzweigtes Polycarbonat alkoxyliert, wobei das Polycarbonat einen Alkohol (B1) enthält, der ein tri- oder höherfunktionelles Polyetherol ist auf Basis von einem C₃-C₁₂ Alkylenoxid und einem Alkohol, der mindestens drei OH-Gruppen aufweist.

12. Verfahren nach Anspruch 11, wobei man zur Alkoxylierung des Polycarbonats Ethylenoxid oder eine Mischung aus Ethylenoxid und C₃-C₅ Alkylenoxid einsetzt.

13. Verfahren nach Anspruch 12, wobei das Gewichtsverhältnis der Summe aus C₃-C₁₂ Alkylenoxid und C₃-C₅ Alkylenoxid zu Ethylenoxid im Bereich von 3 zu 1 bis 1 zu 3 liegt.

14. Verwendung des Amphiphils gemäß einem der Ansprüche 8 bis 10 zur Solubilisierung eines Wirkstoffs, der in Wasser bei 20 °C zu höchstens 10 g/L löslich ist, in wässrigen Lösungen.

15. Verfahren zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, wobei man die Zusammensetzung gemäß den Ansprüchen 1 bis 7 auf die jeweiligen Schädlinge, deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt.

## Claims

1. A composition comprising an active ingredient whose solubility in water at 20°C is not more than 10 g/L, and an amphiphile comprising an alkoxylated hyperbranched polycarbonate, wherein the polycarbonate comprises an alcohol (B1) which is a trifunctional or higher polyfunctional polyetherol based on a C₃-C₁₂ alkylene oxide and an alcohol which has at least three OH groups, wherein the polyetherol comprises at least three C₃-C₁₂ alkylene oxide molecules in polymerized form.

2. The composition according to claim 1, wherein the active ingredient comprises an active agrochemical ingredient, active cosmetic ingredient, active pharmaceutical ingredient or nutritional supplement.

3. The composition according to claim 1 or 2, wherein the C₃-C₁₂ alkylene oxide is propylene oxide.

4. The composition according to any of claims 1 to 3, wherein the alcohol which has at least three OH groups is glycerol, trimethylolethane, trimethylolpropane, 1,2,4-butanetriol, 1,2,3-hexanetriol, 1,2,4-hexanetriol or pentaerythritol.

5. The composition according to any of claims 1 to 4, wherein the alkoxylated polycarbonate is alkoxylated with ethylene oxide or a mixture of ethylene oxide and C₃-C₅ alkylene oxide.

6. The composition according to claim 5, wherein the weight ratio of the sum of C₃-C₁₂ alkylene oxide and C₃-C₅ alkylene oxide to ethylene oxide is in the range from 3:1 to 1:3.

7. The composition according to any of claims 1 to 6, wherein the active ingredient is an active agrochemical ingredient.

8. An amphiphile comprising an alkoxylated hyperbranched polycarbonate, wherein the polycarbonate comprises an alcohol (B1) which is a trifunctional or higher polyfunctional polyetherol based on a C₃-C₁₂ alkylene oxide and an alcohol which has at least three OH groups.

9. The amphiphile according to claim 8, wherein the polyetherol comprises at least three C₃-C₁₂ alkylene oxide molecules in polymerized form.

10. The amphiphile according to claim 8 or 9, wherein the alkoxylated polycarbonate is alkoxylated with ethylene oxide or a mixture of ethylene oxide and C₃-C₅ alkylene oxide.

11. A process for preparing the amphiphile according to any of claims 8 to 10, by alkoxylating a hyperbranched polycarbonate, wherein the polycarbonate comprises an alcohol (B1) which is a trifunctional or higher polyfunctional polyetherol based on a C₃-C₁₂ alkylene oxide and an alcohol which has at least three OH groups.

12. The process according to claim 11, wherein the polycarbonate is alkoxylated using ethylene oxide or a mixture of ethylene oxide and C₃-C₅ alkylene oxide.

13. The process according to claim 12, wherein the weight ratio of the sum of C₃-C₁₂ alkylene oxide and C₃-C₅ alkylene oxide to ethylene oxide is in the range from 3:1 to 1:3.

14. The use of the amphiphile according to any of claims 8 to 10 for solubilizing an active ingredient whose solubility in water at 20°C is not more than 10 g/L, in aqueous solutions.

15. A method of controlling phytopathogenic fungi and/or unwanted plant growth and/or unwanted insect or mite infestation and/or of regulating the growth of plants, wherein the composition according to claims 1 to 7 is caused to act on the respective pests, their habitat, or the plants to be protected from the respective pest, the soil, and/or on unwanted plants and/or on the crop plants and/or on their habitat.

## Revendications

1. Composition contenant une substance active, qui est soluble à raison d'au plus 10 g/l dans l'eau à 20°C, et un amphiphile, comprenant un polycarbonate alcoxylé, hyperramifié, le polycarbonate contenant un alcool (B1), qui est un polyétherol trifonctionnel ou de fonctionnalité supérieure à base d'un oxyde d'alkylène en C₃-C₁₂ et d'un alcool, qui présente au moins trois groupes OH, le polyétherol contenant au moins trois molécules d'oxyde d'alkylène en C₃-C₁₂ sous forme polymérisée.

2. Composition selon la revendication 1, la substance active contenant une substance active agrochimique, une substance active cosmétique, une substance active pharmaceutique ou un complément alimentaire.

3. Composition selon la revendication 1 ou 2, l'oxyde d'alkylène en C₃-C₁₂ étant l'oxyde de propylène.

4. Composition selon l'une quelconque des revendications 1 à 3, l'alcool, qui présente au moins trois groupes OH, étant le glycérol, le triméthyloléthane, le triméthylolpropane, le 1,2,4-butanetriol, le 1,2,3-hexanetriol, le 1,2,4-hexanetriol ou le pentaérythritol.

5. Composition selon l'une quelconque des revendications 1 à 4, le polycarbonate alcoxylé étant alcoxylé par de l'oxyde d'éthylène ou un mélange d'oxyde d'éthylène et d'oxyde alkylène en C₃-C₅.

6. Composition selon la revendication 5, le rapport pondéral de la somme de l'oxyde d'alkylène en C₃-C₁₂ et de l'oxyde d'alkylène en C₃-C₅ à l' oxyde d'éthylène se situant dans la plage de 3:1 à 1:3.

7. Composition selon l'une quelconque des revendications 1 à 6, la substance active étant une substance active agrochimique.

8. Amphiphile contenant un polycarbonate alcoxylé, hyperramifié, le polycarbonate contenant un alcool (B1), qui est un polyétherol trifonctionnel ou de fonctionnalité supérieure à base d'un oxyde d'alkylène en C₃-C₁₂ et d'un alcool, qui présente au moins trois groupes OH.

9. Amphiphile selon la revendication 8, le polyétherol contenant au moins trois molécules d'oxyde d'alkylène en C₃-C₁₂ sous forme polymérisée.

10. Amphiphile selon la revendication 8 ou 9, le polycarbonate alcoxylé étant alcoxylé par de l'oxyde d'éthylène ou un mélange d'oxyde d'éthylène et d'oxyde alkylène en C₃-C₅.

11. Procédé pour la préparation d'un amphiphile selon l'une quelconque des revendications 8 à 10, en ce qu'on alcoxyle un polycarbonate hyperramifié, le polycarbonate contenant un alcool (B1), qui est un polyétherol trifonctionnel ou de fonctionnalité supérieure à base d'un oxyde d'alkylène en C₃-C₁₂ et d'un alcool, qui présente au moins trois groupes OH.

12. Procédé selon la revendication 11, de l'oxyde d'éthylène ou un mélange d'oxyde d'éthylène et d'oxyde d'alkylène en C₃-C₅ étant utilisé pour l'alcoxylation du polycarbonate.

13. Procédé selon la revendication 12, le rapport pondéral de la somme d' oxyde d'alkylène en C₃-C₁₂ et d'oxyde d'alkylène en C₃-C₅ à l'oxyde d'éthylène se situant dans la plage de 3:1 à 1:3.

14. Utilisation de l'amphiphile selon l'une quelconque des revendications 8 à 10 pour la solubilisation d'une substance active, qui est soluble à raison d'au plus 10 g/l dans l'eau à 20°C, dans des solutions aqueuses.

15. Procédé pour lutter contre des champignons phytopathogènes et/ou une croissance non souhaitée de plantes et/ou une attaque non souhaitée par des insectes ou des acariens et/ou pour la régulation de la croissance de plantes, où on laisse agir la composition selon les revendications 1 à 7 sur les différents organismes nuisibles, leur espace de vie ou les plantes, le sol à protéger contre les différents organismes nuisibles et/ou sur les plantes non souhaitées et/ou sur les plantes utiles et/ou leur espace de vie.
